# EUROPÄISCHE PATENTSCHRIFT

(11) **EP 1 596 076 B1**
(45) Veröffentlichungstag und Bekanntmachung des Hinweises auf die Patenterteilung: **11.07.2007**
(21) Anmeldenummer: 04291231.1
(22) Anmeldetag: 13.05.2004
(51) Int. Cl.: F16B 21/02, F16B 5/06

(54) **Verbindungselement zum lösbaren Verbinden von wenigstens zwei Teilen, sowie eine Verwendung und ein Verfahren mittels eines derartigen Verbindungselements**
Connecting device for releasably connecting at least two members, as well as use and a procedure with such a device
Dispositiv de fixation d'au moins deux pièces, utilisation et un procede de ce dispositiv

(43) Veröffentlichungstag der Anmeldung: 16.11.2005
(73) Patentinhaber: Lisi Automotive Rapid, 95650 Puiseux Pontoise (FR)
(72) Erfinder: Kolb Walter, 69214 Eppelheim (DE); Demel Otto, 69123 Heidelberg (DE)
(74) Vertreter: Thinat, Michel

(56) Entgegenhaltungen:
- DE-A- 3 231 893
- DE-A- 10 255 902
- FR-A- 2 790 046
- GB-A- 1 317 752

## Beschreibung

Die vorliegende Erfindung betrifft ein Verbindungselement zum lösbaren Verbinden von mindestens zwei in einem Verbindungsbereich plattenförmigen, sich wenigstens teilweise überlappenden Teilen gemäß dem Oberbegriff des Anspruchs 1, sowie ein derartige Verbindungselemente aufweisendes Gehäuse nach dem Oberbegriff des Anspruchs 11 und ein Verfahren zum lösbaren Verbinden von mindestens zwei in einem Verbindungsbereich plattenförmigen, sich wenigstens teilweise überlappenden Teilen nach dem Oberbegriff des Anspruchs 12.

Die Druckschrift DE-A-3231893 betrifft einen Schnellverschluß zum Verbinden von mit Durchgangsöffnungen versehenen, flachen Werkstückteilen. Der Schnellverschluß weist ein Drehelement, ein fest mit dem Drehelement verbundenes Spannelement und Spreizbarteile auf. Dabei ist das Drehelement als im wesentlichen flache Scheibe ausgebildet und die spreizbaren Teile sind von den beiden Schenkeln eines etwa U-förmigen Federelement gebildet. Dabei sind die drei Element so ausgebildet, daß das Drehelement das U-förmige Federelement durch das mit dem Drehelement verbundenen Spannelement axial unverlierbar sichert.

Im Rahmen der vorliegenden Erfindung werden unter dem Begriff "Gehäuse" so unterschiedliche Gebilde wie etwa ein Schaltschrank einer elektronischen Einrichtung, ein Gehäuse eines Gerätes und eine Karosserie eines Kraftfahrzeugs verstanden, soweit sie auf Grund ihres Anwendungsbereiches gleichartigen Belastungen, wie zum Beispiel Schwingungen, unterliegen.

Bei all diesen Gehäusen geht es darum, ein oder mehrere plattenförmige Teile an einem wenigstens im Befestigungs- beziehungsweise Verbindungsbereich flachen, plattenförmigen Teil einer Grundstruktur oder aber auch zwei oder mehr derartige Teile untereinander zu befestigen. Die Befestigung soll zum Beispiel vibrationsfest sein und nicht als Schraubverbindung ausgelegt sein, weil eine solche in vibrationsfester Version sehr kostenträchtig ist.

Ein weiterer Grund dafür, daß die vorliegende Erfindung auf sehr unterschiedlichen technischen Gebieten Anwendung finden kann, liegt in der auf diesen unterschiedlichen Gebieten zu erfüllenden gemeinsamen praktischen Forderung nach schneller Abnehmbarkeit der Teile, da zum Beispiel Abdeckplatten oder Verkleidungen im Rahmen von Wartungsarbeiten oder Reparaturen schnell und einfach abnehmbar sein sollen. Zudem sind die Montage- und Demontagearbeiten ausschließlich von der Vorderseite des Gehäuses her auszuführen.

Der Erfindung liegt somit die Aufgabe zu Grunde, ein Verbindungselement vorzuschlagen, das geeignet ist, Teile lösbar mit einander zu verbinden, die mindestens in einem Verbindungsbereich plattenförmig ausgebildet sind und sich wenigstens teilweise überlappen. Dabei soll das Verbindungselement nur von der Vorderseite der miteinander zu verbindenden Teile her zu betätigen sein.

Diese Aufgabe wird mit einem Verbindungselement gelöst, das die Merkmale des Anspruchs 1 aufweist.

Die Aufgabe wird ferner durch ein Gehäuse gelöst, das Verbindungselemente nach Anspruch 1 aufweist, sowie durch ein Verfahren zum lösbaren Verbinden von Teilen, das die Merkmale des Anspruchs 12 aufweist.

Das erfindungsgemäße Verbindungselement weist zwei Komponenten auf, und zwar ein erstes Element, das durch die miteinander zu verbindenden Teile hindurch reicht und elastisch verformbar ist, sowie ein zweites, nicht verformbares Element, das das erste Element in einer Verbindungsposition blockiert.

Das erste Element weist ein Kopfteil auf, mit dem es auf dem Teil aufzuliegen kommt, durch das es beim miteinander Verbinden der Teile als erstes hindurch geführt wird. Das erste Element weist ferner ein Rumpfteil auf, das sich vom Kopfteil ausgehend zunächst mit konstantem Querschnitt erstreckt und dann wenigstens zwei symmetrisch angeordnete Ausbuchtungen aufweist. Die Ausbuchtungen sind so geformt, daß sie das Teil, durch das das erste Element beim miteinander Verbinden der Teile als letztes durchgeführt wird, hintergreifen. Der sich mit konstantem Querschnitt erstreckende Abschnitt des Rumpfteils ist in seiner Länge so bemessen, daß er mindestens in etwa, vorzugsweise genau, der Gesamtdicke der miteinander zu verbindenden Teile entspricht.

Bei der weiter unten beschriebenen Ausführungsform weist das erste Element zwei in axialer Richtung aufeinander folgende Paare Ausbuchtungen auf. Dabei ist das vom Kopfteil weiter entfernte Paar Ausbuchtungen in der Hauptsache zum Zwecke der Vormontage gedacht: Vor dem Verbinden eines ersten Teils mit einem zweiten und mit eventuellen weiteren Teilen kann somit das Verbindungselement in ein entsprechendes Loch des ersten Teils eingesteckt werden und braucht während der Montage nicht extra festgehalten zu werden; es ermöglicht also eine Einhandmontage. Unabhängig davon kann das voreingesteckte Verbindungselement in gewissem Maße als Ausrichtungshilfe zum Ausrichten der entsprechenden Löcher der miteinander zu verbindenden Teile dienen.

Die Löcher in den miteinander zu verbindenden Teilen sind jeweils so angeordnet, daß sich beim Übereinanderlegen der miteinander zu verbindenden Teile im Verbindungsbereich ein einziges Durchgangsloch ergibt, in das das Verbindungselement eingesetzt wird und das das Verbindungselement vollständig durchquert.

Bei dem erfindungsgemäßen Verbindungselement ist das Rumpfteil des erstens Elements aus zwei sich im wesentlichen in Längsrichtung des Rumpfteils ersteckenden, zueinander symmetrischen und zum Erhalt der Ausbuchtungen mit Querfaltungen versehenen Streifen eines federnden Materials gebildet. Gemäß einer bevorzugten Ausführungsform sind die beiden Streifen an deren freien Enden miteinander verbunden und am Kopfteil des Verbindungselements durch einen Schlitz getrennt, der dem Verbindungselement eine größere Federkraft verleiht. Gemäß einer alternativen Ausführungsform sind die beiden Streifen an deren freien Enden nicht miteinander verbunden, so daß das Rumpfteil an dem vom Kopfteil abgewandten Ende ein offenes Element darstellt.

Bei der bevorzugten Ausführungsform ist das Kopfteil des erstens Elements des erfindungsgemäßen Verbindungselements zweiteilig und plattenförmig ausgebildet, wobei die beiden Teile des Kopfteils auf einander gegenüberliegenden Seiten des Rumpfsteils angeordnet sind. Die beiden Teile des Kopfteils können dabei, je nach Ausführungsform, in etwa die gleiche Breite aufweisen wie die beiden Streifen des Rumpfteils und sich insbesondere an diese anschließen. Die beiden Teile des Kopfteils können sich aber auch um das Rumpfteil herum erstrecken und auf diese Weise eine fast vollständige ringförmige Kopfplatte bilden, die beim Einsetzen in das Durchgangsloch zur Aufnahme des Verbindungselements auf dem Teil der miteinander zu verbindenden Teile aufzuliegen kommt, durch das es als erstes hindurchgeführt wird.

Gemäß einem weiteren Merkmal der Erfindung ist jedes der beiden Teile des Kopfteils einem der Streifen des Rumpfteils zugeordnet.

Die vorstehend genannte Zuordnung kommt insbesondere bei der bevorzugten Ausführungsform des erfindungsgemäßen Verbindungselements zum Tragen, gemäß der das erste Element einstückig geformt ist, wobei das Rumpfteil im wesentlichen U-förmig mit zwei die Ausbuchtungen aufweisenden Schenkeln ausgebildet ist und wobei jeder Schenkel an dessen freiem Ende in ein zur Längsrichtung des Rumpfteils quer angeordnetes plattenförmiges Teil des zweiteilig ausgebildeten Kopfteils übergeht.

Das erste Element kann wahlweise aus federndem Metall oder auch Kunststoff gefertigt sein.

Das zweite Element des erfindungsgemäßen Verbindungselements, das dazu dient, das erste Element in einer Verbindungsposition zu blockieren, ist vorzugsweise im ersten Element um eine zur Längsrichtung des erstens Elements parallele Achse drehbar angeordnet und kann dabei wenigstens zwei Positionen einnehmen. Die erste Position ist eine Montage-/Demontageposition, in der das erste Element zum Einsetzen in ein die miteinander zu verbindendes Teile durchdringendes Loch, oder zum Herausnehmen aus demselben, verformbar ist. Die zweite Position ist eine Verbindungsposition, in der das erste Element nicht verformbar ist und so nicht aus dem die miteinander zu verbindenden Teile durchdringenden Loch entfernt werden kann.

Vorzugsweise weist das Verbindungselement wenigstens ein Einrastelement zum Arretieren des zweiten Elements in der Verbindungsposition auf. Das Einrastelement kann zum Beispiel durch eine spitzenförmige Erhebung im Kopfteil des erstens Elements und eine entsprechende Vertiefung im zweiten Element gebildet sein.

Die erfindungsgemäße Aufgabe wird ferner durch ein Gehäuse gelöst, das ein oder mehrere vorstehend beschriebene Verbindungselemente aufweist.

Die erfindungsgmäße Aufgabe wird zudem durch ein Verfahren zum lösbaren Verbinden von wenigstens zwei in einem Verbindungsbereich plattenförmigen, sich wenigstens teilweise überlappenden Teilen mittels eines der vorstehend beschriebenen Verbindungselemente gelöst.

Weitere Merkmale und Vorteile der Erfindung ergeben sich aus der nachfolgenden Beschreibung eines Ausführungsbeispiels an Hand der Figuren, von denen
die Figur 1 zwei mit einem erfindungsgemäßen Verbindungselement verbundene Platten zeigt,
die Figur 2 ein erfindungsgemäßes Verbindungselement in der Verbindungsposition zeigt,
die Figur 3 ein erfindungsgemäßes Verbindungselement in der Montageposition zeigt und
die Figur 4 eins der beiden Teile zeigt, die das erfindungsgemäße Verbindungselement bilden.

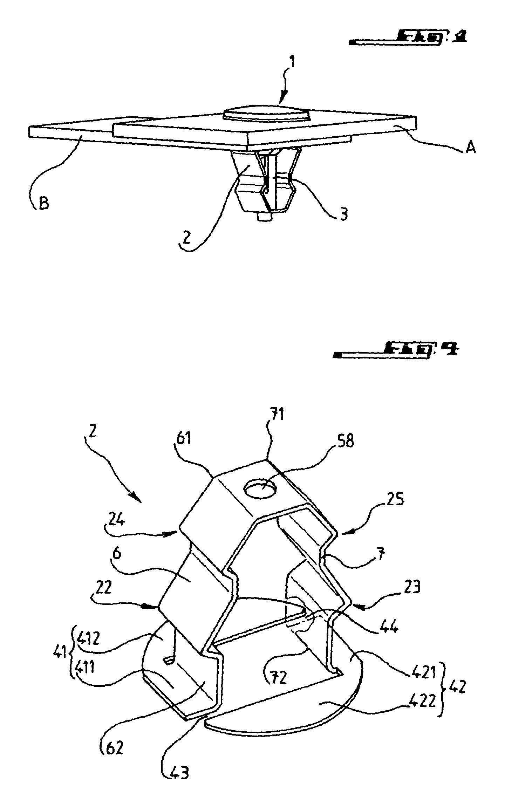

Figur 1 zeigt, wie ein erfindungsgemäßes Verbindungselement 1 zwei sich teilweise überlappende Teile A, B miteinander verbindet. Das Verbindungselement 1, das aus einem ersten, elastisch verformbaren Element 2 und einem zweiten, im ersten Element 2 drehbar angeordneten und dieses in einer Verbindungsposition blockierenden Element 3 besteht, durchdringt die miteinander zu verbindenden Teile A, B in einem dafür vorgesehenen rechteckigen Loch.

Das erste Element 2 weist ein Kopfteil 4 auf, mit dem es auf dem Teil A aufzuliegen kommt, wenn es durch die miteinander zu verbindenden Teile A, B hindurchgeführt wird. Das erste Element 2 weist ferner ein Rumpfteil 5 auf, das sich vom Kopfteil 4 aus mit zunächst konstantem Querschnitt erstreckt und das dann zwei aufeinander folgende Paare symmetrisch angeordneter Ausbuchtungen aufweist. Das erste Paar Ausbuchtungen ist so geformt, daß es das Teil B, durch das das erste Element 2 beim miteinander Verbinden der beiden Teile A, B als letztes hindurchgeführt wird, hintergreift.

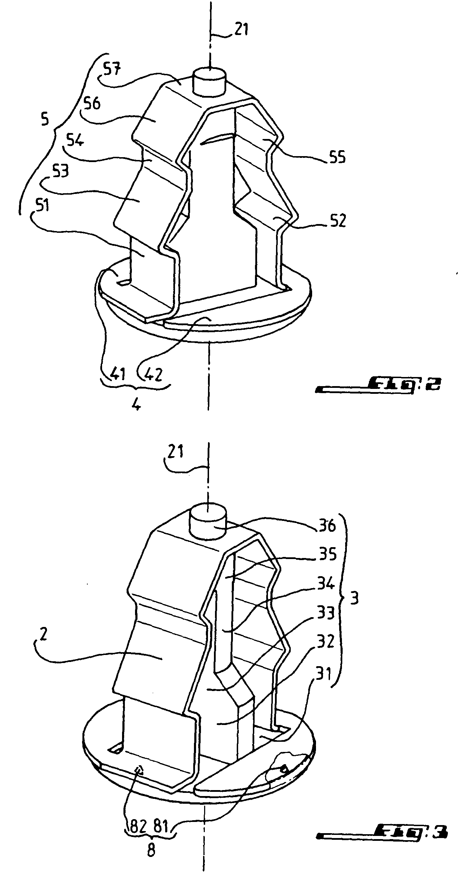

Das Rumpfteil 5 des ersten Elements 2 besteht aus zwei sich im wesentlichen in Längsrichtung des Rumpfteils erstreckenden, zueinander symmetrischen Streifen 6, 7. Die beiden Streifen 6, 7 sind an ihren vom Kopfteil 4 abgewandten Enden 61, 71 durch ein Querteil 57 miteinander verbunden. Da die beiden Streifen 6, 7 symmetrisch ausgebildet sind, gilt die nachstehende Beschreibung des Streifens 6 in analoger Weise auch für den Streifen 7. Im gleichen Sinne sind die Bezugszeichen der einzelnen anschließend beschriebenen Abschnitte jedes der beiden Streifen 6, 7 in der Figur 2 so angeordnet, daß sie einfach zu lesen sind. Dabei ist es also gleichgültig, ob ein Bezugszeichen am Streifen 6 oder am Streifen 7 angetragen ist, da sie für beide Streifen gleichermaßen gelten. Ein Teil der Bezugszeichen findet sich im übrigen in der Figur 4.

Der Streifen 6 des ersten Elements 2 weist zwei Ausbuchtungen 22, 24 auf, die sich mit geraden Abschnitten abwechseln. Der Streifen 6 weist also zunächst einen sich in Längsrichtung des ersten Elements 2 erstreckenden Abschnitt 51 auf, auf den nacheinander ein nach außen gefalteter Abschnitt 52, ein nach innen gefalteter Abschnitt 53, ein sich in Längsrichtung des ersten Elements erstreckender Abschnitt 54, ein nach außen gefalteter Abschnitt 55 und ein zur Mitte hin zurückgefalteter Abschnitt 56 folgen. Dabei bildet der nach außen gefaltete Abschnitt 52 mit dem wieder nach innen gefalteten Abschnitt 53 die erste Ausbuchtung 22 und der nach außen gefaltete Abschnitt 55 mit dem nach innen gefalteten Abschnitt 56 die zweite Ausbuchtung 24. In entsprechender Weise sind im Streifen 7 die Ausbuchtungen 23 und 25 ausgebildet.

Bei der vorstehend beschriebenen Ausgestaltung sind die Abschnitte 52 und 55 schräg nach außen gerichtet, also zum Beispiel nicht parallel zur Längsausdehnung des ersten Elements 2, um ein eventuell erforderliches Herausnehmen des Verbindungselements aus dem Durchgangsloch zu erleichtern.

Bei dem in den Figuren 2 bis 4 dargestellten Verbindungselement sind die beiden Enden der Streifen 6 und 7, die mit den Bezugszeichen 61, 62 beziehungsweise 71, 72 gekennzeichnet sind, mit dem Kopfteil 4 beziehungsweise mit dem die beiden Streifen 6, 7 verbindenden Quersteg 57 verbunden.

Das zweite Element 3 weist ein auf dem Kopfteil 4 des ersten Elements aufliegendes Deckelelement 31 auf, von dem aus sich ein flaches, in eine zylindrische Achse auslaufendes Rumpfteil anschließt, das aus folgenden aufeinander folgenden Abschnitten gebildet wird : einem Basisabschnitt 32, dessen Breite dem Abstand zwischen den beiden geraden Abschnitten 51 der beiden Streifen 6, 7 entspricht; einem sich verjüngenden Abschnitt 33; einem schmalen Abschnitt 34; einem im wesentlichen die gleiche Breite wie der Abschnitt 34 aufweisenden, aber etwas dickeren Abschnitt 35, der bis an den Quersteg 57 heranreicht; und schließlich einem zylindrischen Abschnitt 36, der durch ein Rundloch 58 des Querstegs 57 hindurchreicht. Der Abschnitt 35 ist vorteilhafterweise mit einer in etwa kegelförmigen Verdickung versehen, deren Form derjenigen des vom Spitzenteil des Abschnitts 56 des ersten Elements 2 begrenzten Innenraums angepaßt ist.

Dank der Abmessungen des zweiten Elements 3 und insbesondere der Breite des Abschnitts 32 verhindert das zweite Element 3 in der in Figur 2 dargestellten Position ein elastisches Zusammengehen der Streifen 6 und 7 und damit, daß das zweite Element 3 in das Durchgangsloch der Teile A, B eingesetzt oder aus diesem herausgenommen werden kann. In der in Figur 3 dargestellten Position des zweiten Elements 3 ist dagegen eine elastische Verformung, insbesondere ein Aufeinanderzubewegen der Streifen 6 und 7 im Rahmen der elastischen Verformbarkeit des ersten Elements 3 möglich.

Das Aufeinanderzubewegen der Streifen 6 und 7 wird insbesondere dadurch begünstigt, daß das Kopfteil 4 des erstens Elements 2 zweiteilig ausgebildet ist, wobei die beiden Teile 41, 42 des plattenförmigen Kopfteils 4 auf einander gegenüber liegenden Seiten des Rumpfteils 5 angeordnet sind.

Wie insbesondere aus Figur 4 ersichtlich ist, besteht jedes der beiden Teile 41, 42 des Kopfteils 4 aus einem unmittelbar an den geraden Abschnitt 51 des Streifens 6 anschließenden und quer zu diesem verlaufenden Abschnitt 411 und einem sich daran anschließenden Abschnitt 412, der neben dem Streifen 6 zum Streifen 7 hin verläuft.

In entsprechender Weise schließt sich an den Abschnitt 51 des Streifens 7 ein nach außen abgewinkelter Abschnitt 421 an, von dem ausgehend sich ein Abschnitt 422 neben dem Streifen 7 zum Streifen 6 hin erstreckt. Der vom Streifen 6 ausgehende Abschnitt 412 lauft dabei in ein freies Ende aus, das nicht mit dem Streifen 7 beziehungsweise dem sich daran anschließenden Abschnitt 421 verbunden ist. In entsprechender Weise lauft auch der vom Streifen 7 ausgehende Abschnitt 422 in ein freies Ende aus, das nicht mit dem Streifen 6 beziehungsweise dem sich daran anschließenden Abschnitt 411 in Verbindung steht.

Beim elastischen Zusammendrücken des ersten Elementes 2, bei dem die Streifen 6 und 7 aufeinander zu bewegt werden, verschieben sich also auch die Abschnitte 412 und 422 des Kopfteils 4 in paralleler, entgegensetzt orientierter Weise, ohne daß dabei die Gefahr besteht, daß das erste Element 2 dabei vollständig in das in den Teilen A, B ausgebildete Loch hineinrutscht.

Wie in Figur 3 dargestellt, ist das erfindungsgemäße Verbindungselement 1 vorteilhafter mit einer Positionierhilfe 8 zum Arretieren des zweiten Elements 3 in der Verbindungsposition versehen. Diese Positionierhilfe kann zum Beispiel in einfacher Weise durch eine kleine kegelförmige Erhöhung 81 auf dem Deckelelement 31 des zweiten Elements 3, und zwar auf der dem Kopfteil 4 zugewandten Fläche, und einer entsprechenden Vertiefung 82 im Kopfteil 4, und zwar in der dem Deckelelement 31 zugewandten Fläche der Abschnitte 411, 421, gebildet sein. Vorteilhafterweise wird die Positionierhilfe 8 durch zwei Erhöhungen 81 und zwei Vertiefungen 82 gebildet, die jeweils diametral entgegengesetzt angeordnet sind, damit die Arretierung unabhängig davon funktioniert, ob das zweite Element 3 in die eine oder in die andere Richtung gedreht wird.

Das lösbare Verbinden von mindestens zwei in einem Verbindungsbereich plattenförmigen, sich wenigstens teilweise überlappenden Teilen A, B mittels eines erfindungsgemäßen Verbindungselements erfolgt in folgenden Schritten:
- Einsetzen eines Verbindungselements 1 in ein die miteinander zu verbindenden Teile A, B durchdringendes Loch und
- Verdrehen des zweiten Elements 3 gegenüber dem ersten Element 2 aus einer Montage-/Demontageposition in eine Verbindungsposition.

## Patentansprüche

1. Verbindungselement (1) zum lösbaren Verbinden von mindestens zwei in einem Verbindungsbereich plattenförmigen, sich wenigstens teilweise überlappenden Teilen (A, B), wobei das Verbindungselement aus einem ersten, durch die miteinander zu verbindenden Teile (A, B) hindurch reichenden elastisch verformbaren Element (2) und einem zweiten, das erste Element in einer Verbindungsposition blockierenden Element (3) besteht, und wobei das erste Element (2) ein Kopfteil (4) aufweist, mit dem es auf dem Teil (A) aufzuliegen kommt, durch das es beim miteinander Verbinden der Teile (A, B) als erstes hindurchgeführt wird, **dadurch gekennzeichnet, daß** von diesem Kopfteil (4) ein sich zunächst mit konstantem Querschnitt erstreckendes und dann wenigstens zwei symmetrisch angeordnete Ausbuchtungen (22, 23) aufweisendes Rumpfteil (5) ausgeht, wobei die Ausbuchtungen (22, 23) so geformt sind, daß sie das Teil (B), durch das das erste Element (2) beim miteinander Verbinden der Teile (A, B) als letztes hindurchgeführt wird, hintergreifen.

2. Verbindungselement nach Anspruch 1,
**dadurch gekennzeichnet, daß** das Rumpfteil (5) des ersten Elements (2) aus zwei sich im wesentlichen in Längsrichtung des Rumpfteils erstreckenden, zueinander symmetrischen und zum Erhalt der Ausbuchtungen (2, 23) mit Querfaltungen versehenen Streifen (6, 7) eines elastischen Materials gebildet ist.

3. Verbindungselement nach Anspruch 2,
**dadurch gekennzeichnet, daß** die beiden Streifen (6, 7) an vom Kopfteil (4) abgewandten Enden (61, 71) miteinander verbunden sind.

4. Verbindungselement nach einem der Ansprüche 1 bis 3,
**dadurch gekennzeichnet, daß** das Kopfteil (4) zweiteilig plattenförmig ausgebildet ist, wobei die beiden Teile (41, 42) des Kopfteils (4) auf einander gegenüber liegenden Seiten des Rumpfteils (5) angeordnet sind.

5. Verbindungselement nach Anspruch 4,
**dadurch gekennzeichnet, daß** jedes der beiden Teile (41, 42) des Kopfteils (4) einem der Streifen (6, 7) des Rumpfteils (5) zugeordnet ist.

6. Verbindungselement nach Anspruch 1,
**dadurch gekennzeichnet, daß** das erste Element (2) einstückig geformt ist, wobei das Rumpfteil (5) im wesentlichen U-förmig mit zwei die Ausbuchtungen (22, 23) aufweisenden Schenkeln (6, 7) und einem diese verbindenden Quersteg (57) ausgebildet ist und wobei jeder Schenkel (6, 7) an dessen vom Quersteg (57) abgewandten Ende (62, 72) in ein zur Längsrichtung des Rumpfteils (5) quer angeordnetes plattenförmiges Teil (41, 42) des zweiteilig ausgebildeten Kopfteils (4) übergeht.

7. Verbindungselement nach einem der Ansprüche 1 bis 6,
**dadurch gekennzeichnet, daß** das erste Element (2) aus federndem Metall ist.

8. Verbindungselement nach einem der Ansprüche 1 bis 6,
**dadurch gekennzeichnet, daß** das erste Element (2) aus federndem Kunststoff ist.

9. Verbindungselement nach einem der Ansprüche 1 bis 8,
**dadurch gekennzeichnet, daß** das zweite Element (3) im ersten Element (2) um eine zur Längsrichtung des ersten Elements (2) parallele Achse (21) drehbar angeordnet ist und dabei wenigstens zwei Positionen einnehmen kann, und zwar eine Montage-/Demontageposition, in der das erste Element (2) zum Einsetzen in ein die miteinander zu verbindenden Teile (A, B) durchdringendes Loch oder zum Herausnehmen aus demselben verformbar ist, und eine Verbindungsposition, in der das erste Element (2) nicht verformbar ist und so nicht aus dem die miteinander zu verbindenden Teile (A, B) durchdringenden Loch entfernt werden kann.

10. Verbindungselement nach einem der Ansprüche 1 bis 9,
**dadurch gekennzeichnet, daß** es wenigstens ein Einrastelement (81) zum Arretieren des zweiten Elements (3) in der Verbindungsposition aufweist.

11. Gehäuse, **dadurch gekennzeichnet, daß** es Verbindungselemente (1) nach einem der Ansprüche 1 bis 10 aufweist.

12. Verfahren zum lösbaren Verbinden von mindestens zwei in einem Verbindungsbereich plattenförmigen, sich wenigstens teilweise überlappenden Teilen (A, B) mittels eines Verbindungselements nach einem der Ansprüche 1 bis 10, **gekennzeichnet durch** die Schritte des Einsetzens eines Verbindungselements (1) in ein die miteinander zu verbindenden Teile (A, B) durchdringendes Loch und des Verdrehens des zweiten Elements (3) gegenüber dem ersten Element (2) aus einer Montage-/Demontageposition in eine Verbindungsposition.

## Claims

1. Connecting device (1) for releasably connecting at least two members (A, B), which are plate-shaped in a connecting area and which overlap at least partially, in which the connecting device consists of a first elastically deformable device (2), which passes through the members (A, B) to be connected to each other and a second device (3) locking the first device in a connection position and in which the first device (2) has a head part (4), with which it comes to bear on the member (A), due to which it is guided through first during the connection of the members (A, B) to each other, **characterised in that** a body part (5) extends from this head part (4) - initially with a constant cross-section and then having at least two symmetrically arranged convexities (22, 23), in which the convexities (22, 23) are formed so that they engage behind member (B), due to which the first device (2) is guided through last during the connection of the members (A, B) with each other.

2. Connecting device according to claim 1,
**characterised in that** the body part (5) of the first device (2) is formed by two strips (6, 7) made of an elastic material, which extend essentially in the longitudinal direction of the body part, are symmetrical to each other and are provided with cross folds to obtain the convexities (2, 23).

3. Connecting device according to claim 2,
**characterised in that** both the strips (6, 7) are connected with each other at the ends (61, 71) facing away from the head part (4).

4. Connecting device according to one of claims 1 to 3,
**characterised in that** the head part (4) is made plate-shaped and in two pieces, in which both parts (41, 42) of the head part (4) are arranged on mutually opposite sides of the body part (5).

5. Connecting device according to claim 4,
**characterised in that** each of the two parts (41, 42) of the head part (4) is allocated to one of the strips (6, 7) of the head part (5).

6. Connecting device according to claim 1,
**characterised in that** the first device (2) is made in one piece, in which the body part (5) is made essentially U-shaped with two legs (6, 7) having the convexities (22, 23) and a transverse stud (57) connecting them and in which each leg (6, 7) at its end (62, 72) facing away from the transverse stud (57) passes into a plate-shaped part (41, 42) of the head part (4) made in two pieces, said plate shaped part being arranged transversely to the longitudinal direction of the body part (5).

7. Connecting device according to one of claims 1 to 6,
**characterised in that** the first device (2) is made of resilient metal.

8. Connecting device according to one of claims 1 to 6,
**characterised in that** the first device (2) is made of resilient plastic.

9. Connecting device according to one of claims 1 to 8,
**characterised in that** the second device (3) is arranged in the first device (2) so it can pivot around an axis (21) that is parallel to the longitudinal direction of the first device (2) and in doing so can take up at least two positions, and namely an assembly / disassembly position, in which the first device (2) can be deformed for insertion in a hole penetrating the members (A, B) to be connected to each other or for removal from the same, and a connection position, in which the first device (2) is not deformable and thus cannot be removed from the hole penetrating the members (A, B) to be connected to each other.

10. Connecting device according to one of claims 1 to 9,
**characterised in that** it has at least one latching device (81) for locking the second device (3) in the connection position.

11. Housing **characterised in that** has connecting devices (1) according to one of claims 1 to 10.

12. Procedure for releasably connecting at least two members (A, B), which are plate-shaped in a connecting area and which overlap at least partially using a connecting device according to one of claims 1 to 10,
**characterised by** the steps of the insertion of one connecting device (1) in a hole penetrating the members (A, B) to be connected to each other and of the twisting of the second device (3) with respect to the first device (2) from an assembly / disassembly position into a connection position.

## Revendications

1. Dispositif de fixation(1) pour la liaison amovible d'au moins deux pièces (A, B) en forme de plaques et se chevauchant au moins en partie, l'élément de liaison étant constitué d'un premier élément (2) déformable élastiquement, passant à travers les pièces (A, B) à relier entre elles, et d'un second élément (3) bloquant le premier élément dans une position de liaison, et le premier élément (2) présentant une partie supérieure (4) avec laquelle il vient reposer sur la pièce (A), à travers laquelle il est passé en premier lors de la liaison entre les pièces (A, B), **caractérisé en ce qu'**une partie de tronc (5) s'étendant d'abord avec une section constante et présentant ensuite au moins deux évasements (22, 23) disposés de façon symétrique part de cette partie supérieure (4), les évasements (22, 23) étant formés de telle sorte qu'ils saisissent par l'arrière la pièce (B), à travers laquelle le premier élément (2) est guidé en dernier lors de la liaison des pièces (A, B) entre elles.

2. Dispositif de fixation selon la revendication 1,
**caractérisé en ce que** la partie de tronc (5) du premier élément (2) est formée de deux bandes (6, 7), s'étendant essentiellement dans le sens de la longueur de la partie du tronc, symétriques l'une par rapport à l'autre et dotées de pliages transversaux pour l'obtention des évasements (2, 23), d'un matériau élastique.

3. Dispositif de fixation selon la revendication 2,
**caractérisé en ce que** les deux bandes (6, 7) sont reliées entre elles sur des extrémités (61, 71) opposées à la partie supérieure (4).

4. Dispositif de fixation selon l'une quelconque des revendications 1 à 3,
**caractérisé en ce que** la partie supérieure (4) est conçue en deux parties en forme de plaques, les deux parties (41, 42) de la partie supérieure (4) étant disposées sur des côtés se faisant face de la partie du tronc (5).

5. Dispositif de fixation selon la revendication 4,
**caractérisé en ce que** chacune des deux parties (41, 42) de la partie supérieure (4) est attribuée à l'une des bandes (6, 7) de la partie du tronc (5).

6. Dispositif de fixation selon la revendication 1,
**caractérisé en ce que** le premier élément (2) est formé d'une seule pièce, la partie du tronc (5) étant réalisée sensiblement en U avec deux branches (6, 7) présentant des évasements (22, 23) et une nervure transversale (57) reliant ces branches et chaque branche (6, 7) faisant place sur son extrémité (62, 72) opposée à la nervure transversale (57) à une partie (41, 42) en forme de plaque, disposée transversalement à la direction longitudinale de la partie du tronc (5), de la partie supérieure (4) réalisée en deux parties.

7. Dispositif de fixation selon l'une quelconque des revendications 1 à 6,
**caractérisé en ce que** le premier élément (2) est à base de métal élastique.

8. Dispositif de fixation selon l'une quelconque des revendications 1 à 6,
**caractérisé en ce que** le premier élément (2) est à base de plastique élastique.

9. Dispositif de fixation selon l'une quelconque des revendications 1 à 8,
**caractérisé en ce que** le second élément (3) est disposé dans le premier élément (2) de façon rotative autour d'un axe (21) parallèle à la direction longitudinale du premier élément (2) et peut occuper alors au moins deux positions, à savoir une position de montage/démontage dans laquelle le premier élément (2) peut être déformé pour l'insertion dans un trou traversant les pièces (A, B) à relier entre elles ou pour l'enlèvement de ce trou, et une position de liaison, dans laquelle le premier élément (2) n'est pas déformable et ne peut pas être enlevé ainsi dudit trou traversant les pièces (A, B) à relier entre elles.

10. Dispositif de fixation selon l'une quelconque des revendications 1 à 9,
**caractérisé en ce qu'**il présente au moins un élément d'encliquetage (81) pour l'arrêt du second élément (3) dans la position de liaison.

11. Boîtier, **caractérisé en ce qu'**il présente des éléments de liaison (1) selon l'une quelconque des revendications 1 à 10.

12. Procédé pour la liaison amovible d'au moins deux pièces (A, B), en forme de plaques dans une zone de liaison et se chevauchant au moins partiellement, au moyen d'un élément de liaison selon l'une quelconque des revendications 1 à 10, **caractérisé en ce que**, par les étapes de l'insertion d'un élément de liaison (1) dans un trou traversant les pièces (A, B) à relier entre elles et de la rotation du second élément (3) par rapport au premier élément (2) à partir d'une position de montage/démontage dans une position de liaison.
